# EUROPEAN PATENT APPLICATION

(11) **EP 4 578 349 A1**
(43) Date of publication of application: **02.07.2025**
(21) Application number: 22956312.7
(22) Date of filing: 29.11.2022
(51) Int. Cl.: A47J 42/36

(54) **GRINDING MACHINE AND GRINDING METHOD THEREOF**

(30) Priority: 25.08.2022 CN 202211027050
(71) Applicant: Zhuhai Hengqin Xinrun Intelligent Manufacturing Co., Ltd., Zhuhai, Guangdong 519031 (CN)
(72) Inventor: CHEN, Xuejun, Zhuhai, Guangdong 519031 (CN); MA, Long, Zhuhai, Guangdong 519031 (CN); WANG, Zhi, Zhuhai, Guangdong 519031 (CN)
(74) Representative: Murgitroyd & Company
(86) International application number: PCT/CN2022/135161
(87) International publication number: WO 2024/040777

(57) **Abstract**

A grinding machine and a grinding method thereof. The grinding machine comprises a main machine body (10), a grinding device (20), a powder pressing device (30) and a driving device (40), wherein the grinding device (20) comprises a grinding housing (21) mounted on the main machine body (10), and a grinding component (22) arranged in the grinding housing (21); the powder pressing device (30) comprises a powder receiving device (31) and a powder pressing component (32); the driving device (40) comprises a driver (41) arranged on the main machine body (10), a first transmission shaft (42) mounted on the grinding component (22), and a second transmission shaft (43) mounted on the powder pressing component; the driver (41) is in transmission connection with the first transmission shaft (42); the second transmission shaft (43) is in transmission connection with the first transmission shaft (42); and the second transmission shaft (43) is slidably mounted relative to the powder receiving device (31). A grinding function and a powder pressing function of the grinding machine are achieved at the same time by means of one driver (41), thereby reducing the cost of the grinding machine while the size of the grinding machine is reduced.

## Description

### CROSS-REFERENCE TO RELATED APPLICATIONS

The application claims priority to Chinese Patent Application No. 202211027050X, entitled "GRINDER AND GRINDING METHOD THEREOF" and filed with the China Patent Office on August 25, 2022, the entire content of which is incorporated herein by reference.

### TECHNICAL FIELD

The present application relates to the field of household appliances, and in particular, to a grinder and a grinding method thereof.

### BACKGROUND

With the improvement of living standards, coffee has gradually become a composition of people's lives. In order to meet consumers' requirements for freshness of coffee powder, household coffee bean grinders and bean-grinding pressure coffee machines have appeared on the market. Common household coffee bean grinders and bean-grinding pressure coffee machines have automatic bean grinding functions. After obtaining a certain amount of coffee powder by grinding, a user needs to put it into a powder collector first, and then use a manual powder press to compact the coffee powder, which is cumbersome and difficult to operate.

In order to solve the above problems, bean grinders and bean grinding pressure coffee pots with automatic powder pressing functions have appeared on the market. Such products generally include an automatic bean grinding mechanism and an automatic powder pressing mechanism. Two different motors drive a bean grinding wheel and a powder pressing wheel to rotate respectively, thereby realizing functions of grinding beans and pressing powder. However, since there are two different motors, two sets of transmission mechanisms are required. The two motors drive two sets of gear transmission mechanisms respectively. An overall size of the two sets of mechanisms is large, which makes the coffee bean grinders and the bean grinding pressure coffee machines larger in size and also makes the coffee bean grinders and the bean grinding pressure coffee machines more costly and expensive.

### SUMMARY

An object of the present application is to provide a grinder and a grinding method thereof. According to the present application, a grinding function and a powder pressing function of the grinder can be realized at the same time through one driver, which reduces the volume of the grinder and also reduces a manufacturing cost of the grinder.

The present application provides a grinder, including: a main body, a grinding apparatus, a powder pressing apparatus, and a driving apparatus.

The grinding apparatus includes a grinding housing mounted on the main body and a grinding component arranged in the grinding housing.

The powder pressing apparatus includes a powder collector and a powder pressing component.

The driving apparatus includes a driver arranged on the main body, a first transmission shaft mounted on the grinding component, and a second transmission shaft mounted on the powder pressing component. The driver is in transmission connection with the first transmission shaft. The second transmission shaft is in transmission connection with the first transmission shaft. The second transmission shaft is slidably mounted relative to the powder collector.

Further, the driving apparatus further includes a shaft sleeve connected to the first transmission shaft. The shaft sleeve has a sleeve hole. An end of the second transmission shaft is slidably arranged in the sleeve hole. The first transmission shaft, the second transmission shaft, and the shaft sleeve rotate synchronously.

Further, the driving apparatus further includes a first spring. The sleeve hole extends through the shaft sleeve. The sleeve hole has a first orifice and a second orifice. An end of the first transmission shaft is inserted into the sleeve hole via the first orifice. An end of the second transmission shaft is slidably arranged in the sleeve hole via the second orifice. The first spring is located in the sleeve hole and is clamped between the first transmission shaft and the second transmission shaft.

Further, a grinding channel is formed between the grinding housing and the grinding component. The powder collector has a powder storage tank in communication with the grinding channel. The powder pressing component is arranged in the powder storage tank. The grinding channel is located directly above the powder storage tank.

Further, the driving apparatus further includes a transmission wheel set. The driver has a rotating shaft. The transmission wheel set has an input gear and an output gear. The input gear is mounted on the rotating shaft and rotates synchronously with the rotating shaft. The output gear is mounted on the first transmission shaft and rotates synchronously with the first transmission shaft. The output gear is provided with a material passing channel. The grinding channel, the material passing channel, and the powder storage tank are arranged in sequence from top to bottom and in communication with each other in sequence.

Further, the driving apparatus further includes a second spring and an anti-jamming ball. The output gear is provided with a first positioning groove. The grinding component is provided with a second positioning groove and a shaft hole. The grinding component is sleeved on the first transmission shaft through the shaft hole. The second spring is mounted in the first positioning groove. The anti-jamming ball is clamped between the second spring and the grinding component. A part of the anti-jamming ball is located in the first positioning groove, and a remaining part of the anti-jamming ball is located in the second positioning groove.

Further, the grinding housing has an internal grinding tooth. the grinding component has an external grinding tooth. The grinding channel is formed between the internal grinding tooth and the external grinding tooth. A width of the grinding channel gradually decreases from top to bottom.

Further, a plurality of internal grinding teeth and a plurality of external grinding teeth are respectively provided. The plurality of internal grinding teeth and the plurality of external grinding teeth are spaced apart in a circumferential direction of the grinding component. The plurality of internal grinding teeth and the plurality of external grinding teeth extend along a first spiral trajectory. The grinding channel extends along the first spiral trajectory.

The powder pressing component includes a powder pressing block. A plurality of powder pressing blocks are provided. The plurality of powder pressing blocks are spaced apart in a circumferential direction of the second transmission shaft. Each of the powder pressing blocks has a powder pressing surface and a powder guiding surface. The powder pressing surface and the powder guiding surface are spaced apart in a direction away from the powder collector. The powder pressing surface and the powder guiding surface extend along a second spiral trajectory. A powder guiding channel extends along the second spiral trajectory is formed between the powder pressing surface of any of the powder pressing blocks and the powder guiding surface of the adjacent powder pressing block. The powder guiding channel is in communication with the powder storage tank.

Further, a rotation direction of the first spiral trajectory is opposite to a rotation direction of the second spiral trajectory.

The present application further provides a grinding method for a grinder. The method includes the following steps:
adding raw material into a grinding channel, starting a driver to drive a first transmission shaft to rotate in a first direction, and the first transmission shaft driving a grinding component to rotate to grind the raw material in the grinding channel into powder;
stopping the driver after the grinding component performs grinding for a preset time;
starting the driver to drive the first transmission shaft to rotate in a second direction opposite to the first direction, the first transmission shaft driving, through the second transmission shaft, a powder pressing component to rotate, the raw material ground into powder falling into a powder storage tank one after another, and the powder pressing component compacting the raw material ground into powder in the powder storage tank while rotating;
the powder pressing component gradually rising and pushing the second transmission shaft to slide in a direction away from the powder storage tank as a height of the raw material ground into powder in the powder storage tank increase; and
stopping the driver after the powder pressing component rotates and performs compaction for a preset time.

The technical solutions provided in the present application have the following advantages and effects.

In the grinding component and the powder pressing component of the present application, the first transmission shaft is in transmission connection with the second transmission shaft, and the grinding component and the powder pressing component rotate simultaneously through a same driver and a same set of transmission mechanism (transmission wheel set). The powder pressing component of the present application can slide relative to the grinding component. As the amount of the powder in the powder collector increases, the powder pressing component gradually rises, realizing the grinding function and the powder pressing function of the grinder. According to the present application, the volume of the grinder can be reduced, and the manufacturing cost of the grinder can be reduced.

### BRIEF DESCRIPTION OF THE DRAWINGS

FIG. 1 is a sectional view of a grinder;
FIG. 2 is a schematic view of connections between a grinding component, a first transmission shaft, a second transmission shaft, and a driver;
FIG. 3 is an exploded view of a grinding apparatus, a powder pressing apparatus, and a driving apparatus;
FIG. 4 is a schematic structural view of the first transmission shaft, the second transmission shaft, a shaft sleeve, and a powder pressing component;
FIG. 5 is a sectional view of an output gear, the first transmission shaft, the second transmission shaft, and the shaft sleeve;
FIG. 6 is an exploded view of the grinding component, the first transmission shaft, and the output gear;
FIG. 7 is a sectional view of the grinding component, the first transmission shaft, and the output gear;
FIG. 8 is a schematic view of connections between the second transmission shaft and the powder pressing component; and
FIG. 9 is a schematic structural view of the powder pressing component.

Illustration or reference signs:
10: main body;
20: grinding apparatus; 21: grinding housing; 22: grinding component; 23: screw; 24: pre-grinding wheel; 211: internal grinding tooth; 221: second positioning groove; 222: external grinding tooth; 30: powder pressing apparatus; 31: powder collector; 32: powder pressing component; 311: powder storage tank; 312: handle; 321: central axis; 322: powder pressing block; 323: powder guiding channel; 3221: powder pressing surface; 3222: powder guiding surface;
40: driving apparatus; 41: driver; 42: first transmission shaft; 43: second transmission shaft; 44: shaft sleeve; 45: first spring; 46: transmission wheel set; 47: second spring; 48: anti-jamming ball; 49: positioning ring; 421: first limiting ring; 431: second limiting ring; 441: sleeve hole; 461: input gear; 462: output gear; 463: transmission gear; 491: ball hole; 4621: material passing channel; 4622: first positioning groove; 4623: positioning post.

### DETAILED DESCRIPTION

Specific implementations of the present application will be described in further detail below with reference to the accompanying drawings and embodiments. The following embodiments are intended to illustrate the present application but are not intended to limit the scope of the present application.

In the description of the present application, it is to be understood that the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be construed as limiting the present application.

In the description of the present application, it is to be understood that unless otherwise specified and defined explicitly, the terms "mounting", "connection", "joining", "communication", "abutting", and "clamping" should be understood in a broad sense, which may be, for example, a fixed connection, a detachable connection, or an integral connection; a mechanical connection or an electrical connection; or a direct connection, an indirect connection via an intermediate medium; or an internal connection between two elements. Those of ordinary skill in the art can understand specific meanings of these terms in the present application according to specific situations.

Unless otherwise specified or otherwise defined, in the description of the present application, it is to be understood that the terms "first", "second", and the like are used in the present application to describe various information, but the information should not be limited to these terms. These terms are only intended to distinguish information of the same type from each other. For example, without departing from the scope of the present application, "first" information may also be called "second" information, and similarly, "second" information may also be called "first" information.

Unless specifically stated otherwise or otherwise defined, the term "and/or" as used in the present application includes any and all combinations of one or more of the associated listed items.

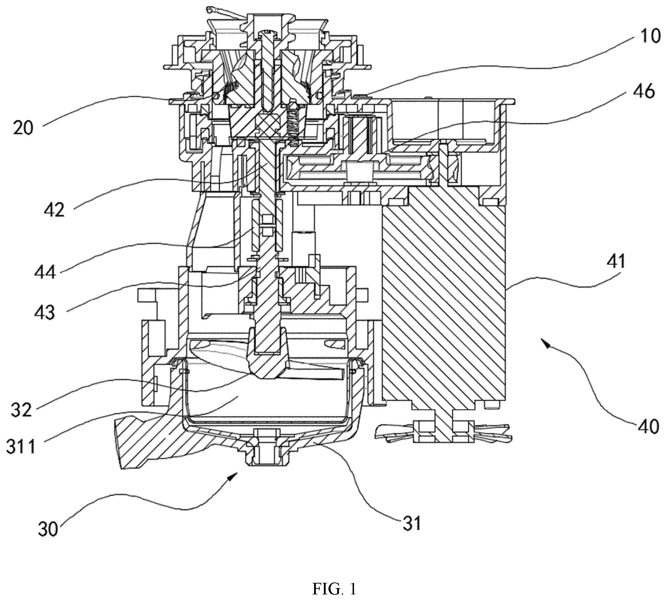

For the convenience of description, unless otherwise stated, the upward and downward directions mentioned below are consistent with the upward and downward directions in FIG. 1.

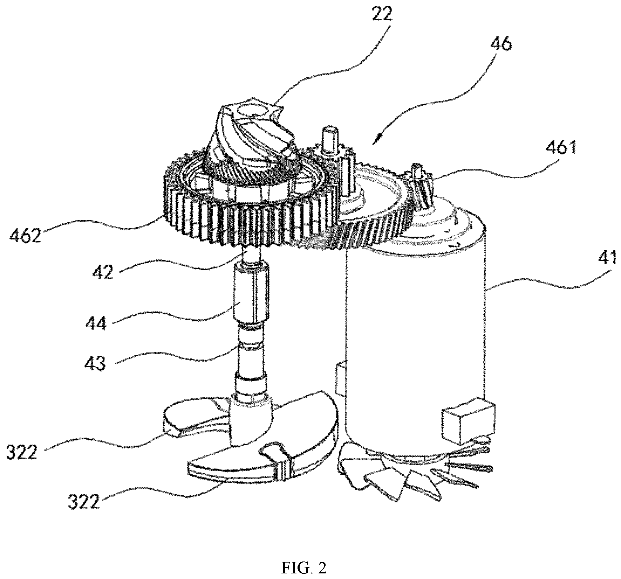

As shown in FIG. 1 to FIG. 3, a grinder includes a main body 10, a grinding apparatus 20, a powder pressing apparatus 30, and a driving apparatus 40. The grinding apparatus 20, the powder pressing apparatus 30, and the driving apparatus 40 are mounted on the main body 10 respectively. The grinding apparatus 20 may grind granular raw material such as coffee beans into powder. The powder pressing apparatus 30 may compact the powder. The driving apparatus 40 may drive the grinding apparatus 20 and the powder pressing apparatus 30 to operate at the same time.

The grinding apparatus 20 includes a grinding housing 21 mounted on the main body 10 and a grinding component 22 arranged in the grinding housing 21. The grinding housing 21 has a grinding cavity. The grinding component 22 is rotatably mounted in the grinding cavity. When the grinding component 22 rotates, the raw material is ground into powder through crushing friction between the grinding component 22 and an inner wall of the grinding cavity.

The powder pressing apparatus 30 includes a powder collector 31 and a powder pressing component 32. The powder collector 31 may receive the powder ground by the grinding apparatus 20. The grinding apparatus 20 continuously transports the ground powder into the powder collector 31. The powder pressing component 32 is rotatably mounted in the powder collector 31 and located above the powder. The powder in the powder collector 31 is compacted by rotation and extrusion of the powder pressing component 32.

The driving apparatus 40 includes a driver 41 arranged on the main body 10, a first transmission shaft 42 mounted on the grinding component 22, and a second transmission shaft 43 mounted on the powder pressing component 32. The driver 41 is a device such as an electric motor or a motor. The first transmission shaft 42 and the second transmission shaft 43 are arranged in sequence from top to bottom. Rotation axes of the first transmission shaft 42 and the second transmission shaft 43 coincide with each other, and are arranged vertically. The driver 41 is in transmission connection with the first transmission shaft 42. The driver 41 is in transmission connection with the first transmission shaft 42 so that the first transmission shaft 42 can rotate. The second transmission shaft 43 is in transmission connection with the first transmission shaft 42. While the first transmission shaft 42 drives the second transmission shaft 43 to rotate synchronously, the second transmission shaft 43 can also slide up and down relative to the powder collector 31.

When the grinder operates, the driver 41 is started, the driver 41 drives the grinding component 22 of the grinding apparatus 20 and the powder pressing component 32 of the powder pressing apparatus 30 to rotate simultaneously. When the grinding component 22 rotates, the raw material is ground into powder and the powder is continuously transported to the powder collector 31. When the powder pressing component 32 rotates, the powder falling into the powder collector 31 may be compacted. As the amount of the powder in the powder collector 31 continues to increase, a height of the compacted powder in the powder collector 31 may increase, and the powder pressing component 32 may move upwards while rotating. After completion of powder grinding and powder pressing, the powder collector 31 is taken out, and the powder pressing component 32 automatically moves downwards and is reset under the action of gravity. In the present application, powder grinding and powder pressing are realized through one driver 41, and there is no need for different drivers 41 to drive the grinding component 22 and the powder pressing component 32 respectively, which can reduce the volume of the grinder and also reduce a manufacturing cost of the grinder.

Specifically, in some embodiments, when the driver 41 drives the grinding component 22 and the powder pressing component 32 to rotate, the powder grinding and the powder pressing may be or not performed simultaneously. In this embodiment, the powder grinding and the powder pressing are not performed simultaneously. That is, when the driver 41 rotates in a first direction, the grinding component 22 rotates to grind powder, and the powder pressing component 32 is idling and does not compact the powder. When the driver 41 rotates in a second direction opposite to the first direction, the grinding component 22 is idling and does not grind the powder, and the powder pressing component 32 rotates to compact powder.

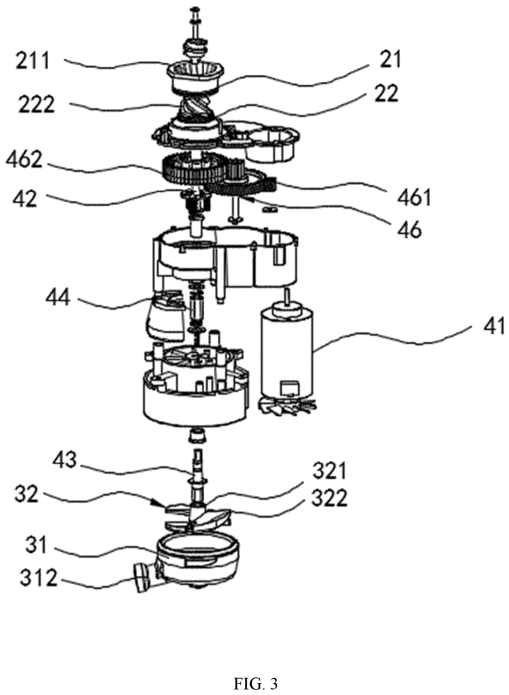

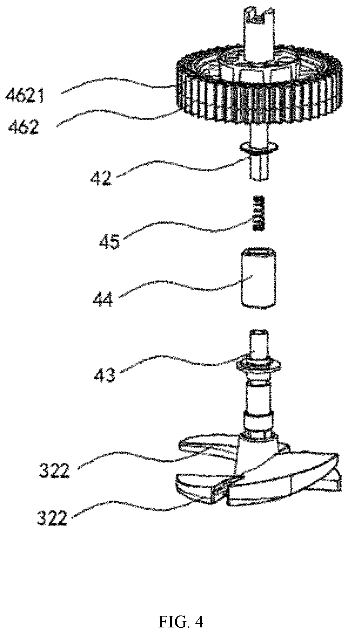

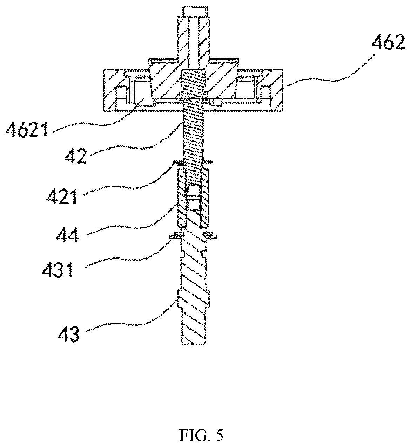

As shown in FIG. 3 to FIG. 5, specifically, in some embodiments, the driving apparatus 40 further includes a shaft sleeve 44 connected to the first transmission shaft 42. The shaft sleeve 44 has a sleeve hole 441. An end of the second transmission shaft 43 is slidably arranged in the sleeve hole 441. The first transmission shaft 42, the second transmission shaft 43, and the shaft sleeve 44 rotate synchronously. A cross section of the sleeve hole 441 is in an irregular shape, such as an oval or a square. A cross section of a lower end of the first transmission shaft 42 and a cross section of an upper end of the second transmission shaft 43 match the cross section of the sleeve hole 441, so that the second transmission shaft 43 can slide up and down along the sleeve hole 441 while the first transmission shaft 42 can drive the second transmission shaft 43 to rotate simultaneously.

In addition, the cross section of the sleeve hole 441 may alternatively be in a shape of a circle; an inner wall of the sleeve hole 441 is provided with a strip groove extending along an axial direction of the first transmission shaft 42 or the second transmission shaft 43; and the second transmission shaft 43 is provided with a sliding rod that may be slidably disposed in the strip groove, which can also enable that the second transmission shaft 43 can slide up and down along the sleeve hole 441 while the first transmission shaft 42 can drive the second transmission shaft 43 to rotate simultaneously.

Specifically, in some embodiments, the driving apparatus 40 further includes a first spring 45. The sleeve hole 441 extends through the shaft sleeve 44. The sleeve hole 441 has a first orifice and a second orifice. The lower end of the first transmission shaft 42 is inserted into the sleeve hole 441 via the first orifice. The lower end of the first transmission shaft 42 is connected to an upper end of the shaft sleeve 44, and rotates synchronously with the shaft sleeve 44. The upper end of the second transmission shaft 43 is slidably arranged in the sleeve hole 441 via the second orifice. The second transmission shaft 43 is connected to the lower end of the shaft sleeve 44 and rotates synchronously with the shaft sleeve 44. The upper end of the second transmission shaft 43 may alternatively slide up and down along the sleeve hole 441. The first spring 45 is located in the sleeve hole 441 and clamped between the first transmission shaft 42 and the second transmission shaft 43. The first spring 45 may prevent collision between the lower end of the first transmission shaft 42 and the upper end of the second transmission shaft 43, and may also facilitate downward movement and resetting of the second transmission shaft 43 after completion of powder pressing.

Specifically, in some embodiments, the lower end of the first transmission shaft 42 and the upper end of the second transmission shaft 43 are each provided with a limiting groove. Two ends of the first spring 45 are respectively engaged into the limiting grooves to prevent radial deformation of the first spring 45.

Specifically, in some embodiments, the first transmission shaft 42 and the second transmission shaft 43 may alternatively directly sleeved together. That is, the first transmission shaft 42 or the second transmission shaft 43 is provided with an insertion hole. The first transmission shaft 42 or the second transmission shaft 43 is inserted into the insertion hole. An inner wall of the insertion hole is provided with a strip groove extending along the axial direction of the first transmission shaft 42 or the second transmission shaft 43. The first transmission shaft 42 or the second transmission shaft 43 is provided with a sliding rod slidably arranged in the strip groove.

Specifically, in some embodiments, the first transmission shaft 42 is provided with a first shoulder, and the second transmission shaft 43 is provided with a second shoulder. Widths of the first shoulder and the second shoulder are both greater than a diameter of the sleeve hole 441. The first shoulder and the second shoulder play a limiting role to prevent excessively deep insertion of the first transmission shaft 42 and the second transmission shaft 43 into the sleeve hole 441.

Specifically, in some embodiments, the first transmission shaft 42 is further provided with a first limiting ring 421. The first limiting ring 421 is located above the first shoulder. A diameter of the first limiting ring 421 is greater than the width of the first shoulder. The second transmission shaft 43 is further provided with a second limiting ring 431. The second limiting ring 431 is located below the second shoulder. A diameter of the second limiting ring 431 is greater than the width of the second shoulder, further preventing the excessively deep insertion of the first transmission shaft 42 and the second transmission shaft 43 into the sleeve hole 441.

Specifically, the second transmission shaft 43 and the shaft sleeve 44 overlap each other by a certain dimension. A stroke of the second transmission shaft 43 moving up and down is smaller than this dimension, so as to ensure that the second transmission shaft 43 and the shaft sleeve 44 may not slip off from each other when the second transmission shaft 43 moves up and down. Preferably, the diameter of the second transmission shaft 43 gradually decreases from top to bottom, the diameter of the sleeve hole 441 decreases from top to bottom, and the diameter of the upper end of the second transmission shaft 43 is greater than the diameter of the lower end of the sleeve hole 441, to prevent the upper end of the second transmission shaft 43 from being separated from the sleeve hole 441.

As shown in FIG. 1 to FIG. 4, specifically, in some embodiments, a grinding channel is formed between the grinding housing 21 and the grinding component 22. The powder collector 31 has a powder storage tank 311 in communication with the grinding channel. The powder pressing component 32 is arranged in the powder storage tank 311. The grinding channel is located directly above the powder storage tank 311. The powder in the grinding channel directly falls into the powder storage tank 311 under the action of gravity, which prevents internal clogging of the main body 10 caused by the powder.

Specifically, in some embodiments, the driving apparatus 40 further includes a transmission wheel set 46. The driver 41 has a rotating shaft. The transmission wheel set 46 includes an input gear 461 and an output gear 462. The input gear 461 and the output gear 462 are transmitted via a plurality of transmission gears 463 with different diameters. Both the input gear 461 and the output gear 462 are meshed with the transmission gear 463 to realize power transmission of the driver 41 and enable the output gear 462 to have an appropriate rotation speed. The input gear 461 is mounted on the rotating shaft of the driver 41 and rotates synchronously with the rotating shaft. The output gear 462 is mounted on the first transmission shaft 42 and rotates synchronously with the first transmission shaft 42. The output gear 462 is provided with a material passing channel 4621. The material passing channel 4621 extends through the output gear 462 along an axis direction of the output gear 462 from top to bottom. A plurality of material passing channels 4621 are provided. The plurality of material passing channels 4621 are circumferentially spaced apart along the rotation axis of the output gear 462. The grinding channel, the material passing channel 4621, and the powder storage tank 311 are arranged in sequence from top to bottom and in communication with each other in sequence. The grinding channel is located directly above the material passing channel 4621. The material passing channel 4621 is located directly above the powder storage tank 311. The grinding channel, the material passing channel 4621, and the powder storage tank 311 are arranged in sequence in a vertical direction, so that the powder can smoothly fall into the powder storage tank 311, which prevents clogging of the grinding channel and the material passing channel 4621 by the powder.

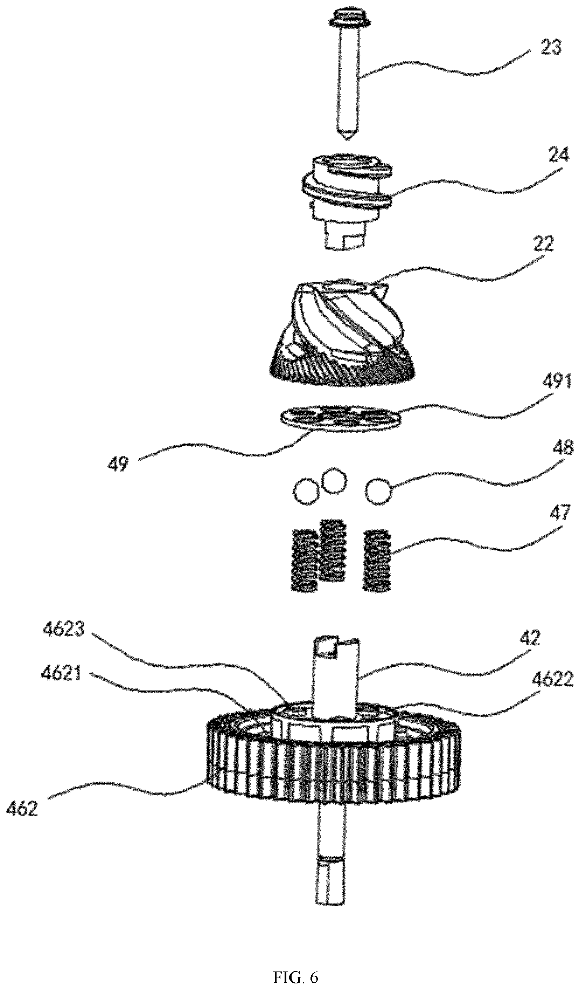

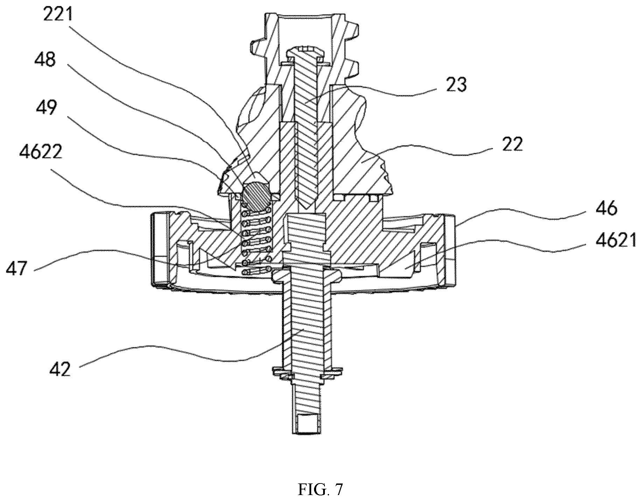

As shown in FIG. 6 to FIG. 7, specifically, in some embodiments, the driving apparatus 40 further includes a second spring 47 and an anti-jamming ball 48. A first positioning groove 4622 is provided on an upper end face of the output gear 462. The first positioning groove 4622 is a blind groove. A lower end face of the grinding component 22 is provided with a second positioning groove 221. The second positioning groove 221 is a blind groove. A central region of the grinding component 22 is provided with a shaft hole extending through the grinding component 22 along the rotation axis of the grinding component 22. The grinding component 22 is sleeved on the first transmission shaft 42 via the shaft hole. The grinding component 22 is rotatable relative to the first transmission shaft 42. The second spring 47 is mounted in the first positioning groove 4622. The second spring 47 is clamped between the anti-jamming ball 48 and a bottom wall of the first positioning groove 4622. The anti-jamming ball 48 is clamped between the second spring 47 and the grinding component 22. A part of the anti-jamming ball 48 is located in the first positioning groove 4622, and the remaining part of the anti-jamming ball 48 is located in the second positioning groove 221. A plurality of second springs 47, a plurality of anti-jamming balls 48, a plurality of first positioning grooves 4622, and a plurality of second positioning grooves 221 are provided and are in one-to-one correspondence with each other. The output gear 462 is mounted on the first transmission shaft 42 through a flat key. When the output gear 462 drives the first transmission shaft 42 to rotate synchronously, the output gear 462 drives the grinding component 22 to rotate through the anti-jamming ball 48 to grind the raw material. When the grinding component 22 is jammed by the raw material of the grinding channel, the anti-jamming ball 48 is pressed into the first positioning groove 4622 by the grinding component 22, so that the output gear 462 and the first transmission shaft 42 are idling to prevent overload of the driver 41 caused by jamming of the grinding component 22.

Specifically, in some embodiments, the driving apparatus 40 further includes a positioning ring 49. The output gear 462 is provided with a ring groove. The first positioning groove 4622 is provided on a bottom wall of the ring groove. The bottom wall of the ring groove is further provided with a positioning post 4623. The positioning ring 49 is provided with a ball hole 491 and a limiting hole. The positioning ring 49 is mounted in the ring groove. A plurality of positioning posts 4623 and a plurality of limiting holes are provided and are in one-to-one correspondence with each other. The positioning post 4623 is engaged into the limiting hole to position the positioning ring 49 to prevent rotation of the limit ring, and the anti-jamming ball 48 is located in the ball hole 491. A diameter of the ball hole 491 is equal to a diameter of the anti-jamming ball 48, and diameters of the first positioning groove 4622 and the second positioning groove 221 are greater than the diameter of the anti-jamming ball 48, so that the anti-jamming ball 48 only rigidly collides with the positioning ring 49, thereby reducing wear of the grinding component 22 and the output gear 462 by the anti-jamming ball 48.

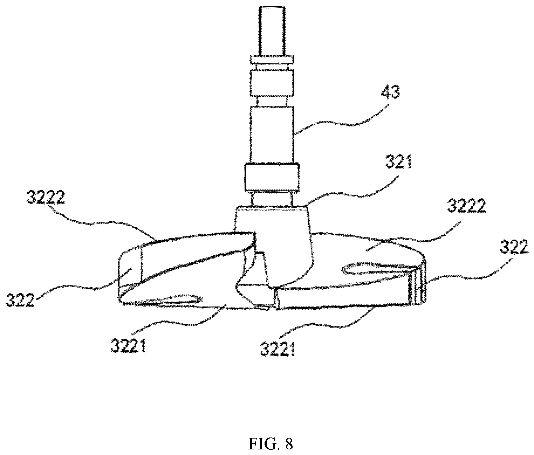

As shown in FIG. 6 to FIG. 9, specifically, in some embodiments, the grinding housing 21 has an internal grinding tooth 211, the grinding component 22 has an external grinding tooth 222. The grinding channel is formed between the internal grinding tooth 222 and the external grinding tooth 211. The width of the grinding channel gradually decreases from top to bottom. The granular powder falls into the grinding channel from above and moves downwards under the action of gravity. The width of the grinding channel gradually decreases from top to bottom, so particles are ground smaller and smaller until they become powder. The lower end of the grinding component 22 is provided with a powder discharge gap in communication with the grinding channel, and finally the powder falls into the powder collector 31 via the powder discharge gap at the lower end of the grinding channel.

Specifically, in some embodiments, the grinding apparatus 20 further includes a pre-grinding wheel 24 and a screw 23. The pre-grinding wheel 24 may improve quality of grinding powder. The pre-grinding wheel 24 is mounted above the grinding component 22. The pre-grinding wheel 24 is provided with an engaging shaft. The engaging shaft is engaged in the shaft hole of the grinding component 22. The pre-grinding wheel 24 is provided with a central through hole. The screw 23 extends through the central through hole and the shaft hole of the grinding component 22 to be connected to the first transmission shaft 42. An inner wall of the central through hole is provided with a hole shoulder. A rod head of the screw 23 abuts against the hole shoulder so that the pre-grinding wheel 24 is mounted on the grinding component 22.

Specifically, in some embodiments, a plurality of internal grinding teeth 211 and a plurality of external grinding teeth 222 are respectively provided. The plurality of internal grinding teeth 211 and the plurality of external grinding teeth 222 are each spaced apart in a circumferential direction of the grinding component 22. The plurality of internal grinding teeth 211 and the plurality of external grinding teeth 222 both extend along a first spiral trajectory. An axis of the first spiral trajectory coincides with the rotation axis of the grinding component 22. The grinding channel extends along the first spiral trajectory. The grinding channel and the external grinding teeth 222 both extend spirally along the first spiral trajectory. While each external grinding tooth 222 spirally extends from top to bottom, the width of each external grinding tooth 222 gradually increases from top to bottom, and the grinding component 22 is in the shape of a truncated cone as a whole, so that the width of the grinding channel gradually decreases from top to bottom. Therefore, when the grinding component 22 rotates in one of the directions, the particles can be ground into powder, but when the grinding component 22 rotates in the other opposite direction, the particles may not be ground.

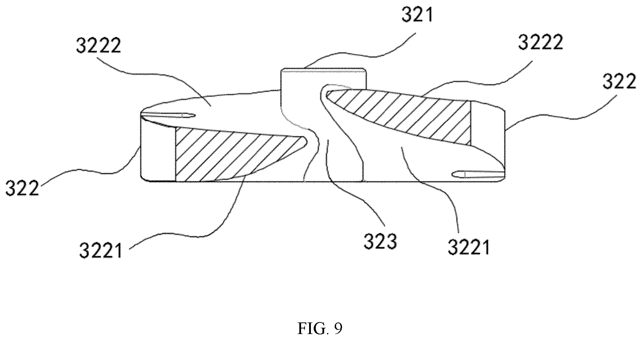

The powder pressing component 32 includes a central shaft 321 and a powder pressing block 322. The central shaft 321 is connected to the second transmission shaft 43. A plurality of powder pressing blocks 322 are provided. In this embodiment, two powder pressing blocks 322 are provided. The plurality of powder pressing blocks 322 are spaced apart in a circumferential direction of the second transmission shaft 43 or the central shaft 321. Each powder pressing block 322 has a powder pressing surface 3221 and a powder guiding surface 3222. The powder pressing surface 3221 and the powder guiding surface 3222 are both arc-shaped surfaces. The powder pressing surface 3221 and the powder guiding surface 3222 are spaced apart in a direction away from the powder collector 31. The powder pressing surface 3221 is located at a lower end of the powder pressing block 322. The powder pressing surface 3221 is configured to abut against the powder in the powder collector 31 to compact the powder. The powder guiding surface 3222 is located at an upper end of the powder pressing block 322. The powder ground by the grinding apparatus falls onto the powder guiding surface 3222 from top to bottom, and then falls into the powder collector 31 along the arc-shaped surface of the powder guiding surface 3222. The powder pressing surface 3221 and the powder guiding surface 3222 are spaced apart. The powder pressing surface 3221 and the powder guiding surface 3222 both extend along a second spiral trajectory. The second spiral trajectory extends in the axis direction of the second transmission shaft 43 or the central shaft 321. When projected in the axis direction of the second transmission shaft 43, adjacent powder pressing blocks 322 partially overlap. A powder guiding channel 323 extending along the second spiral trajectory is formed between the powder pressing surface 3221 of any powder pressing block 322 and the powder guiding surface 3222 of the adjacent powder pressing block 322. The powder guiding channel 323 is in communication with the powder storage tank 311. The powder pressing surface 3221 and the powder guiding surface 3222 are both arc-shaped surfaces extending spirally from top to bottom. The powder pressing surface 3221 has a first end and a second end. A height of the powder pressing surface 3221 gradually decreases from the first end to the second end. The powder guiding surface 3222 has a third end and a fourth end. A height of the powder guiding surface 3222 gradually decreases from the third end to the fourth end. The third end of the powder pressing surface 3221 of each powder pressing block 322 is located above the second end of the powder guiding surface 3222 of the adjacent powder pressing block 322, so that the powder guiding channel 323 extending along the second spiral trajectory is formed between the third end of the powder pressing surface 3221 of each powder pressing block 322 and the second end of the powder guiding surface 3222 of the adjacent powder pressing block 322. When the powder pressing component 32 rotates in one of the directions (a counterclockwise direction shown in the top view of FIG. 9) to press powder, the fourth end of the powder guiding surface 3222 is located upstream of a rotation path. In this case, the powder falling on the powder guiding surface 3222 always abuts against the powder guiding surface 3222 pushed by the powder pressing block 322 during its rotation, it is difficult for the powder to fall into the powder collector 31 from the powder guiding channel 323, and the powder pressing block 322 does not press the powder. When the powder pressing component 32 rotates in another direction (a clockwise direction shown in the top view of FIG. 9), the powder falling on the powder guiding surface 3222 falls into the powder collector 31 from the powder guiding channel 323, under inertia of the rotation of the powder pressing block 322; and the powder pressing block 322 can compact the powder falling into the powder collector 31, so that the powder pressing component 32 can rotate unidirectionally to press the powder.

Specifically, in some embodiments, a rotation direction of the first spiral trajectory is opposite to a rotation direction of the second spiral trajectory, so that the grinding component 22 grinds the powder and the powder pressing component 32 is idling when the driver 41 rotates in one of the directions, and the powder pressing component 32 presses the powder and the grinding component 22 is idling when the driver 41 rotates in the other direction.

Specifically, in some embodiments, the main body 10 is further provided with a powder collecting cavity. The powder collecting cavity is located below the material passing channel 4621 of the output gear 462. An inner wall of the powder collecting cavity is provided with a plurality of support blocks. The powder collector 31 is provided with a plurality of hangers. An upper surface of the support block is provided with a groove that matches the shape of the hanger. The hanger abuts against the support block and then is engaged in the groove. When the powder pressing component 32 rotates, the groove can play a limiting role, which can prevent the powder collector 31 from being rotated by friction force from the powder pressing component 32, thereby ensuring a powder compaction effect.

The plurality of support blocks and the plurality of hangers are spaced apart in a circumferential direction of the powder collector 31, and a through gap is formed between adjacent support blocks. A mouth of the powder collecting cavity is located at the lower end of the main body 10. When the powder collector 31 is mounted, a handle 312 of the powder collector 31 is gripped so that the powder collector 31 moves upwards via the mouth of the powder collecting cavity, the hanger of the powder collector 31 moves through the through gap to be above the support block, then the powder collector 31 is rotated horizontally so that the hanger is directly above the support block, and finally the powder collector 31 is placed on the support block through the hanger.

A grinding method for a grinder includes the following steps.

Raw material is added into a grinding channel of a grinding apparatus 20. The raw material may be coffee bean granules. A driver 41 is started to rotate in a first direction. The driver 41 drives a first transmission shaft 42 to rotate in the first direction. The first transmission shaft 42 drives a grinding component 22 to rotate to grind the raw material in the grinding channel into powder.

The driver 41 stops after the grinding component 22 performs grinding for a preset time.

The driver 41 is started to drive the first transmission shaft 42 to rotate in a second direction opposite to the first direction. The first transmission shaft 42 drives, through the second transmission shaft 43, a powder pressing component 32 to rotate. The raw material ground into powder falls into a powder storage tank 311 one after another. The powder pressing component 32 compacts the raw material ground into powder in the powder storage tank 311 while rotating.

As the height of the raw material ground into powder in the powder storage tank 311 increase, the powder pressing component 32 gradually rises and pushes the second transmission shaft 43 to slide in a direction away from the powder storage tank 311.

The driver 41 stops after the powder pressing component 32 rotates and performs compaction for a preset time.

Finally, the powder collector 31 is removed, and the powder pressing component 32 falls downward under the action of gravity and the spring until it reaches an initial position.

The above embodiments are not exhaustively listed based on the present application. In addition, there may be many other unlisted implementations. Any replacements and improvements made without departing from the concept of the present application shall fall within the protection scope of the present application.

## Claims

1. A grinder, comprising a main body, a grinding apparatus, a powder pressing apparatus, and a driving apparatus;
wherein the grinding apparatus comprises a grinding housing mounted on the main body and a grinding component arranged in the grinding housing;
the powder pressing apparatus comprises a powder collector and a powder pressing component; and
the driving apparatus comprises a driver arranged on the main body, a first transmission shaft mounted on the grinding component, and a second transmission shaft mounted on the powder pressing component; the driver is in transmission connection with the first transmission shaft; the second transmission shaft is in transmission connection with the first transmission shaft; and the second transmission shaft is slidably mounted relative to the powder collector.

2. The grinder according to claim 1, wherein the driving apparatus further comprises a shaft sleeve connected to the first transmission shaft; the shaft sleeve has a sleeve hole; and an end of the second transmission shaft is slidably arranged in the sleeve hole; and the first transmission shaft, the second transmission shaft, and the shaft sleeve rotate synchronously.

3. The grinder according to claim 2, wherein the driving apparatus further comprises a first spring; the sleeve hole extends through the shaft sleeve; and the sleeve hole has a first orifice and a second orifice; an end of the first transmission shaft is inserted into the sleeve hole via the first orifice; an end of the second transmission shaft is slidably arranged in the sleeve hole via the second orifice; and the first spring is located in the sleeve hole and clamped between the first transmission shaft and the second transmission shaft.

4. The grinder according to any one of claims 1 to 3, wherein a grinding channel is formed between the grinding housing and the grinding component; the powder collector has a powder storage tank in communication with the grinding channel; the powder pressing component is arranged in the powder storage tank; and the grinding channel is located directly above the powder storage tank.

5. The grinder according to claim 4, wherein the driving apparatus further comprises a transmission wheel set; and the driver has a rotating shaft; the transmission wheel set has an input gear and an output gear, wherein the input gear is mounted on the rotating shaft and rotates synchronously with the rotating shaft, the output gear is mounted on the first transmission shaft and rotates synchronously with the first transmission shaft; the output gear is provided with a material passing channel; and the grinding channel, the material passing channel, and the powder storage tank are arranged in sequence from top to bottom and in communication with each other in sequence.

6. The grinder according to claim 5, wherein the driving apparatus further comprises a second spring and an anti-jamming ball; the output gear is provided with a first positioning groove, and the grinding component is provided with a second positioning groove and a shaft hole; and the grinding component is sleeved on the first transmission shaft through the shaft hole; the second spring is mounted in the first positioning groove; the anti-jamming ball is clamped between the second spring and the grinding component; a part of the anti-jamming ball is located in the first positioning groove, and a remaining part of the anti-jamming ball is located in the second positioning groove.

7. The grinder according to claim 4, wherein the grinding housing has an internal grinding tooth, the grinding component has an external grinding tooth; the grinding channel is formed between the internal grinding tooth and the external grinding tooth; and a width of the grinding channel gradually decreases from top to bottom.

8. The grinder according to claim 7, wherein a plurality of internal grinding teeth and a plurality of external grinding teeth are respectively provided; the plurality of internal grinding teeth and the plurality of external grinding teeth are spaced apart in a circumferential direction of the grinding component; the plurality of internal grinding teeth and the plurality of external grinding teeth extend along a first spiral trajectory; and the grinding channel extends along the first spiral trajectory; and
the powder pressing component comprises a powder pressing block; and a plurality of powder pressing blocks are provided; the plurality of powder pressing blocks are spaced apart in a circumferential direction of the second transmission shaft; and each of the powder pressing blocks has a powder pressing surface and a powder guiding surface; wherein the powder pressing surface and the powder guiding surface are spaced apart in a direction away from the powder collector; the powder pressing surface and the powder guiding surface extend along a second spiral trajectory; a powder guiding channel extending along the second spiral trajectory is formed between the powder pressing surface of any of the powder pressing blocks and the powder guiding surface of the adjacent powder pressing block; and the powder guiding channel being in communication with the powder storage tank.

9. The grinder according to claim 8, wherein a rotation direction of the first spiral trajectory is opposite to a rotation direction of the second spiral trajectory.

10. A grinding method for a grinder, comprising the following steps:
adding raw material into a grinding channel, starting a driver to drive a first transmission shaft to rotate in a first direction, and the first transmission shaft driving a grinding component to rotate to grind the raw material in the grinding channel into powder;
stopping the driver after the grinding component performs grinding for a preset time;
starting the driver to drive the first transmission shaft to rotate in a second direction opposite to the first direction, the first transmission shaft driving, through the second transmission shaft, a powder pressing component to rotate, the raw material ground into powder falling into a powder storage tank one after another, and the powder pressing component compacting the raw material ground into powder in the powder storage tank while rotating;
the powder pressing component gradually rising and pushing the second transmission shaft to slide in a direction away from the powder storage tank as a height of the raw material ground into powder in the powder storage tank increase; and
stopping the driver after the powder pressing component rotates and performs compaction for a preset time.
